# EUROPÄISCHE PATENTSCHRIFT

(11) **EP 3 890 177 B1**
(45) Veröffentlichungstag und Bekanntmachung des Hinweises auf die Patenterteilung: **29.11.2023**
(21) Anmeldenummer: 20167561.8
(22) Anmeldetag: 01.04.2020
(51) Int. Cl.: H02M 5/458, H02J 1/16, H02J 3/30, H02P 27/06

(54) **STEUEREINRICHTUNG FÜR EINEN ZWISCHENKREISUMRICHTER UND ZWISCHENKREISUMRICHTER**
INTERMEDIATE CIRCUIT INVERTER AND CONTROL DEVICE FOR AN INTERMEDIATE CIRCUIT INVERTER
DISPOSITIF DE COMMANDE POUR UN CONVERTISSEUR INDIRECT ET UN CONVERTISSEUR INDIRECT

(43) Veröffentlichungstag der Anmeldung: 06.10.2021
(73) Patentinhaber: Siemens Aktiengesellschaft, 80333 München (DE)
(72) Erfinder: Reichl, Gerald, 91056 Erlangen (DE); Dietz, Bernd, 91074 Herzogenaurach (DE); Schäfers, Elmar, 90763 Fürth (DE)
(74) Vertreter: Siemens Patent Attorneys

(56) Entgegenhaltungen:
- EP-A1- 2 525 481
- US-A1- 2005 258 795

## Beschreibung

Die Erfindung betrifft eine Steuereinrichtung für einen Zwischenkreisumrichter und einen Zwischenkreisumrichter.

Große Maschinen, zu denen z.B. Servopressen und Hydraulikpressen zählen, unterliegen im Betrieb großen Leistungsschwankungen. Sie werden daher mit kinetischen Energiespeichern betrieben, um eine Einspeiseleistung zu minimieren und wechselnde Leistungsanteile im Zwischenkreis zu halten.

Die Patentschrift EP 2 525 481 B1 offenbart hierzu eine Steuereinrichtung für einen Zwischenkreisumrichter,
- wobei der Zwischenkreisumrichter einen Gleichspannungszwischenkreis aufweist, in dem ein Zwischenkreiskondensator angeordnet ist,
- wobei der Zwischenkreisumrichter mindestens einen Speiseumrichter aufweist, über den aus einem Versorgungsnetz elektrische Energie in den Gleichspannungszwischenkreis eingespeist wird,
- wobei der Zwischenkreisumrichter mindestens einen Lastumrichter aufweist, über den einer Nutzlast aus dem Gleichspannungszwischenkreis elektrische Energie zugeführt wird,
- wobei der Zwischenkreisumrichter mindestens einen Pufferumrichter aufweist, über den eine rotierende Schwungmasse zum bidirektionalen Energieaustausch an den Gleichspannungszwischenkreis angekoppelt ist,
- wobei die Steuereinrichtung den Speiseumrichter, den Lastumrichter und den Pufferumrichter steuert,
- wobei die Steuereinrichtung einen ersten Spannungsregler implementiert, in dem anhand einer Sollspannung und einer über dem Zwischenkreiskondensator abfallenden Istspannung ein Sollstrom für den Speiseumrichter ermittelt wird und von dem der Speiseumrichter entsprechend angesteuert wird,
- wobei die Steuereinrichtung einen Drehzahlregler implementiert, in dem anhand einer Solldrehzahl und einer Istdrehzahl der Schwungmasse ein erster Sollmomentanteil für die Schwungmasse ermittelt wird,
- wobei die Steuereinrichtung einen zweiten Spannungsregler implementiert, in dem anhand der Sollspannung und der Istspannung ein zweiter Sollmomentanteil für die Schwungmasse ermittelt wird,
- wobei der erste und der zweite Sollmomentanteil zu einem Sollmoment addiert werden und der Pufferumrichter entsprechend angesteuert wird.

Die Patentschrift EP 2 525 481 B1 offenbart ferner einen Zwischenkreisumrichter,
- wobei der Zwischenkreisumrichter einen Gleichspannungszwischenkreis aufweist, in dem ein Zwischenkreiskondensator angeordnet ist,
- wobei der Zwischenkreisumrichter mindestens einen Speiseumrichter aufweist, über den aus einem Versorgungsnetz elektrische Energie in den Gleichspannungszwischenkreis eingespeist wird,
- wobei der Zwischenkreisumrichter mindestens einen Lastumrichter aufweist, über den einer Nutzlast aus dem Gleichspannungszwischenkreis elektrische Energie zugeführt wird,
- wobei der Zwischenkreisumrichter mindestens einen Pufferumrichter aufweist, über den eine rotierende Schwungmasse zum bidirektionalen Energieaustausch an den Gleichspannungszwischenkreis angekoppelt ist,
- wobei der Zwischenkreisumrichter eine Steuereinrichtung aufweist, die den Speiseumrichter, den Lastumrichter und den Pufferumrichter steuert,
- wobei die Steuereinrichtung nach einem der obigen Ansprüche ausgebildet ist.

Der Erfindung liegt die Aufgabe zugrunde, eine Steuereinrichtung für einen Zwischenkreisumrichter zu verbessern.

Die Lösung der Aufgabe gelingt durch Anspruch 1, d.h. eine Steuereinrichtung für einen Zwischenkreisumrichter,
- wobei der Zwischenkreisumrichter einen Gleichspannungszwischenkreis aufweist, in dem ein Zwischenkreiskondensator angeordnet ist,
- wobei der Zwischenkreisumrichter mindestens einen Speiseumrichter aufweist, über den aus einem Versorgungsnetz elektrische Energie in den Gleichspannungszwischenkreis eingespeist wird,
- wobei der Zwischenkreisumrichter mindestens einen Lastumrichter aufweist, über den einer Nutzlast aus dem Gleichspannungszwischenkreis elektrische Energie zugeführt wird,
- wobei der Zwischenkreisumrichter mindestens einen Pufferumrichter aufweist, über den ein kinetischer Energiespeicher zum bidirektionalen Energieaustausch an den Gleichspannungszwischenkreis angekoppelt ist,
- wobei die Steuereinrichtung den Speiseumrichter, den Lastumrichter und den Pufferumrichter steuert,
- wobei die Steuereinrichtung einen ersten Spannungsregler implementiert, in dem anhand einer Sollspannung und einer über dem Zwischenkreiskondensator abfallenden Istspannung ein Sollstrom für den Speiseumrichter ermittelt wird und von dem der Speiseumrichter entsprechend angesteuert wird,
- wobei die Steuereinrichtung einen Drehzahlregler implementiert, in dem anhand einer Solldrehzahl und einer Istdrehzahl des kinetischen Energiespeichers ein erster Sollmomenanteil für den kinetischen Energiespeicher ermittelt wird,
- wobei die Steuereinrichtung einen Leistungsregler implementiert, der anhand einer wenigstens teilweise speiseumrichterseitig ermittelten Istleistung einen leistungsbasierten Sollmomentanteil für den kinetischen Energiespeicher ermittelt,
- wobei der erste und der leistungsbasierte Sollmomentanteil zu einem Sollmoment addiert werden und der Pufferumrichter entsprechend angesteuert wird.

Die Erfindung ist vorteilhaft, da dadurch ein Regelungsverfahren bzw. Steuerungsverfahren zum Energiemanagement bei mechanischer Energiespeicherung erweitert wird. Die Erfindung stellt einerseits eine gute Alternative zur o. g. Steuereinrichtung für einen Zwischenkreisumrichter dar. Ferner wird eine Einstellbarkeit des Energiemanagements an den jeweiligen Maschinen vereinfacht und verbessert.

Die Istleistung ist anhand der Istspannung und des Sollstroms oder anhand der Istspannung und eines durch den Speiseumrichter gerichteten Iststroms gebildet.

Besonders bevorzugt ist die Istleistung anhand der Istspannung und eines durch den Speiseumrichter gerichteten Iststroms gebildet.

In einer vorteilhaften Ausführungsform ist der Leistungsregler als P-Regler mit einer Proportionalverstärkung ausgebildet.

In einer vorteilhaften Ausführungsform weist der Leistungsregler wenigstens ein Hochpassfilter auf.

Das Hochpassfilter dient insbesondere einer Beseitigung eines Gleichanteils der Istleistung.

In einer vorteilhaften Ausführungsform ist ein Sollwert des Leistungsreglers zur Beseitigung eines Wechselanteils der hochpassgefilterten Istleistung 0 ("null").

Die Erfindung ist vorteilhaft, da das Energiemanagement mit kinetischem Energiespeicher für Maschinen mit großer Leistungsschwankung gut durch den beschriebenen Leistungsregler gelingt. Vorteilhaft ist die Regelgröße des Leistungsreglers die Stellgröße des Spannungsreglers der Einspeisung. Deren Wechselanteil wird vorteilhaft durch den Leistungsregler beseitigt.

Da ein Einstellen zweier Regler für die gleiche Regelgröße, insbesondere Spannung, wie in EP 2 525 481 B1 beschrieben, nötig ist, entfällt eine spezielle Parametrierung der Einspeisung. Die Einspeisung kann daher mit einer werksseitig eingestellten Standardparametrierung betrieben werden.

Das Ergebnis des Energiemanagements verbessert sich, da sich die Zwischenkreisspannung schwankungsärmer einstellt.

Weiterhin ist es vorteilhaft, dass die Erfindung - anders als die in EP 2 525 481 B1 beschriebene Lösung - ohne eine Informationen bezüglich einer Leistungsanforderung der mit dem Zwischenkreis verbundenen, Leistung saugenden bzw. abgebenden Teilnehmer (z.B. Servopressen) auskommt. Daher ist das Verfahren antriebsautark implementierbar.

Es ist mit der Erfindung zudem möglich, bestehende Anlagen nachzurüsten, sodass diese auch über ein Energiemanagement verfügen.

Dies gelingt vorteilhaft mit der beschriebenen Regelung, wenigstens einem Energiespeichermotor, wenigstens einem Umrichter und einer Steuerungseinheit.

In einer vorteilhaften Ausführungsform implementiert die Steuereinrichtung einen zweiten Spannungsregler, in dem anhand der Sollspannung und der Istspannung ein zweiter Sollmomentanteil für den kinetischen Energiespeicher ermittelt wird, wobei bei Vorliegen einer ersten Anlagenbeschaffenheit der zweite Spannungsregler aktiviert ist und der Leistungsregler deaktiviert ist, wobei bei Vorliegen einer zweiten Anlagenbeschaffenheit der zweite Spannungsregler deaktiviert ist und der Leistungsregler aktiviert ist, wobei bei Vorliegen der ersten Anlagenbeschaffenheit der erste und der zweite Sollmomentanteil zu einem Sollmoment addiert werden und der Pufferumrichter entsprechend angesteuert wird, wobei bei Vorliegen der zweiten Anlagenbeschaffenheit der erste und der leistungsbasierte Sollmomentanteil zu einem Sollmoment addiert werden und der Pufferumrichter (8) entsprechend angesteuert wird.

Der Leistungsregler und der zweite Spannungsregler sind in dieser Ausführungsform implementiert, jedoch wirkt anlagenspezifisch nur einer der beiden.

Diese Ausführungsform ist von Vorteil, da eine Steuereinrichtung für eine Vielzahl von Anlagentypen und Anforderungen verwendet werden kann.

In einer vorteilhaften Ausführungsform ist der zweite Spannungsregler als P-Regler ausgebildet und eine Proportionalverstärkung des zweiten Spannungsreglers ist derart bestimmt, dass der zweite Spannungsregler einen Sollwertsprung während eines Teils einer Periode zu einem Großteil ausregelt.

In einer vorteilhaften Ausführungsform oszilliert eine momentane Leistungsanforderung mit einer Periode zwischen einem Minimalwert und einem Maximalwert, wobei der erste Spannungsregler als PI-Regler ausgebildet ist, der eine Proportionalverstärkung und eine Nachstellzeit aufweist, wobei die Proportionalverstärkung und die Nachstellzeit des ersten Spannungsreglers derart bestimmt sind, dass der erste Spannungsregler einen Sollwertsprung während einer Periode nur zu einem geringen Teil ausregelt.

In einer vorteilhaften Ausführungsform implementiert die Steuereinrichtung zusätzlich einen Vorsteuerkreis, wobei dem Vorsteuerkreis die momentane Leistungsanforderung zugeführt wird, wobei der Vorsteuerkreis die momentane Leistungsanforderung hochpassfiltert, wobei der Vorsteuerkreis anhand der hochpassgefilterten momentanen Leistungsanforderung ein Vorsteuersignal ermittelt, das zusätzlich zum ersten Sollmomentanteil und zum leistungsbasierten Sollmomentanteil oder zum ersten Sollmomentanteil und zum zweiten Sollmomentanteil additiv in das Sollmoment eingeht.

In einer vorteilhaften Ausführungsform ist die Steuereinrichtung derart ausgebildet, dass in einem ersten Betriebszustand der Steuereinrichtung sowohl der leistungsbasierte Spannungsregler als auch der Vorsteuerkreis aktiviert sind und in einem zweiten Betriebszustand der Steuereinrichtung alternativ der leistungsbasierte Spannungsregler aktiviert ist und der Vorsteuerkreis deaktiviert ist oder der leistungsbasierte Spannungsregler deaktiviert ist und der Vorsteuerkreis aktiviert ist.

In einer vorteilhaften Ausführungsform ist der erste Betriebszustand der Steuereinrichtung der laufende Betrieb des Zwischenkreisumrichters, wobei der zweite Betriebszustand der Steuereinrichtung der Anlauf des Zwischenkreisumrichters ist.

In einer vorteilhaften Ausführungsform umfasst der Vorsteuerkreis zusätzlich einen Integrator und ein dem Integrator nachgeschaltetes Verzögerungsglied, wobei das Vorsteuersignal dem Integrator zugeführt wird und wobei das integrierte und zeitverzögerte Vorsteuersignal dem Drehzahlregler als zusätzliches Eingangssignal zugeführt wird.

In einer vorteilhaften Ausführungsform oszilliert eine momentane Leistungsanforderung mit einer Periode zwischen einem Minimalwert und einem Maximalwert, wobei der Drehzahlregler als PI-Regler ausgebildet ist, der eine Proportionalverstärkung und eine Nachstellzeit aufweist, wobei die Proportionalverstärkung und die Nachstellzeit des Drehzahlreglers derart bestimmt sind, dass der Drehzahlregler einen Sollwertsprung während eines Teils einer Periode zu einem Großteil ausregelt.

In einer vorteilhaften Ausführungsform oszilliert die momentane Leistungsanforderung mit einer Periode zwischen einem Minimalwert und einem Maximalwert, wobei der Drehzahlregler als PI-Regler ausgebildet ist, der eine Proportionalverstärkung und eine Nachstellzeit aufweist, und wobei die Proportionalverstärkung und die Nachstellzeit des Drehzahlreglers derart bestimmt sind, dass der Drehzahlregler einen Sollwertsprung während einer Periode nur zu einem geringen Teil ausregelt.

Die Lösung der oben beschriebenen Aufgabe gelingt ferner durch Anspruch 15, d.h. einen Zwischenkreisumrichter,
- wobei der Zwischenkreisumrichter einen Gleichspannungszwischenkreis aufweist, in dem ein Zwischenkreiskondensator angeordnet ist,
- wobei der Zwischenkreisumrichter mindestens einen Speiseumrichter aufweist, über den aus einem Versorgungsnetz elektrische Energie in den Gleichspannungszwischenkreis eingespeist wird,
- wobei der Zwischenkreisumrichter mindestens einen Lastumrichter aufweist, über den einer Nutzlast aus dem Gleichspannungszwischenkreis elektrische Energie zugeführt wird,
- wobei der Zwischenkreisumrichter mindestens einen Pufferumrichter aufweist, über den ein kinetischer Energiespeicher zum bidirektionalen Energieaustausch an den Gleichspannungszwischenkreis angekoppelt ist,
- wobei der Zwischenkreisumrichter eine Steuereinrichtung aufweist, die den Speiseumrichter, den Lastumrichter und den Pufferumrichter steuert,
- wobei die Steuereinrichtung wie bereits beschrieben ausgebildet ist.

In einer vorteilhaften Ausführungsform ist der kinetische Energiespeicher als rotierende Schwungmasse ausgebildet.

Ein kinetischer Energiespeicher ist vorteilhaft als rotierende Schwungmasse ausgebildet. Ein kinetischer Energiespeicher ist alternativ eine dynamoelektrische rotatorische Maschine, insbesondere ein Rotor einer dynamoelektrischen rotatorischen Maschine. Ferner kann der kinetische Energiespeicher auch eine dynamoelektrische rotatorische Maschine mit einer Trägheitsvorrichtung, z.B. einer Scheibe am Motorschaft, sein.

Die Lösung der Aufgabe gelingt zudem durch Anspruch 17, d.h. eine Umformmaschine, insbesondere Presse, aufweisend einen derartigen Zwischenkreisumrichter.

Die Erfindung eignet sich besonders gut für Umformmaschinen mit einer geradlinigen Relativbewegung der Werkzeuge. Hierzu zählen z.B. Pressen, insbesondere Spindelpressen, Hydraulikpressen, Servopressen und Pneumatikpressen.

Die Erfindung eignet sich zudem für Schmiedehämmer und Zentrifugen sowie für alle Anwendungen, in denen ein kinetischer Energiespeicher vorhanden ist bzw. benötigt wird.

Die Erfindung bietet den Vorteil, dass eine Leistung konstant gehalten werden kann.

Im Folgenden wird die Erfindung anhand der in den Figuren gezeigten Ausführungsbeispiele näher beschrieben und erläutert. Es zeigen:
- FIG 1: einen Zwischenkreisumrichter, aufweisend einen Gleichspannungszwischenkreis,
- FIG 2: einen möglichen Verlauf der momentanen Leistungsanforderung,
- FIG 3: eine mögliche Ausgestaltung der internen Struktur der Steuereinrichtung,
- FIG 4: eine mögliche Ausgestaltung der internen Struktur der Steuereinrichtung mit einem Vorsteuerkreis,
- FIG 5: eine weitere mögliche Ausgestaltung der internen Struktur der Steuereinrichtung,
- FIG 6: eine mögliche Ausgestaltung des Hochpassfilters der FIG 4 und der FIG 5,
- FIG 7: eine mögliche Ausgestaltung des Hochpassfilters der FIG 4 und der FIG 5,
- FIG 8: eine mögliche Ausgestaltung eines Aufschaltungsblocks,
- FIG 9: eine weitere mögliche Ausgestaltung der internen Struktur der Steuereinrichtung und
- FIG 10: eine Umformmaschine mit einem Zwischenkreisumrichter.

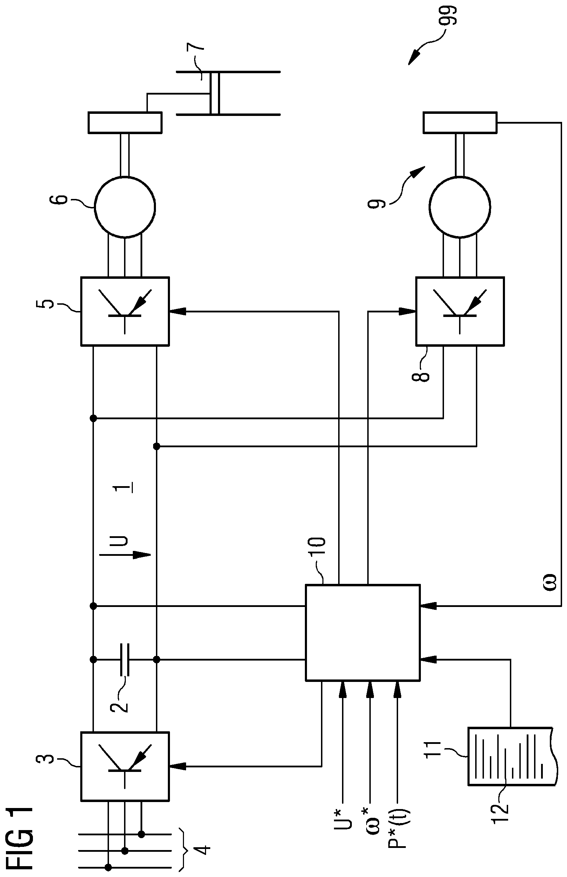

FIG 1 zeigt einen Zwischenkreisumrichter 99, aufweisend einen Gleichspannungszwischenkreis 1. In dem Gleichspannungszwischenkreis 1 ist ein Zwischenkreiskondensator 2 angeordnet. Über dem Zwischenkreiskondensator 2 fällt eine Istspannung U ab. Die Figur zeigt ferner einen Speiseumrichter 3.

Der Speiseumrichter 3 ist derart ausgebildet, dass über den Speiseumrichter 3 aus einem Versorgungsnetz 4 elektrische Energie in den Gleichspannungszwischenkreis 1 eingespeist wird. Der Speiseumrichter 3 ist vorteilhaft ein gesteuerter Umrichter. Der Speiseumrichter 3 weist vorteilhaft GTOs (= gate turn off-Thyristoren) oder IGBTs (= Insulated Gate Bipolar Transistors) auf. Es sind jedoch auch andere Halbleiterbauelemente möglich.

Die Figur zeigt zudem einen Lastumrichter 5 auf. Der Lastumrichter 5 ist derart ausgebildet, dass über den Lastumrichter 5 einer Nutzlast 6 aus dem Gleichspannungszwischenkreis 1 elektrische Energie zugeführt wird.

Die Nutzlast ist vorzugsweise eine Synchronmaschine einer Servopresse, welche z.B. einen Pressenstempel 7 in einem vorgegebenen Bewegungsmuster auf und ab bewegt.

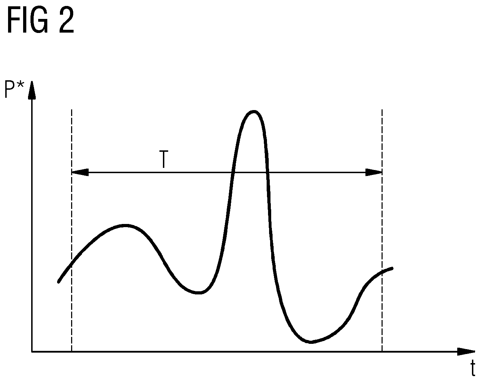

Vorzugsweise wird die Nutzlast 6 periodisch betrieben. In diesem Fall oszilliert eine momentane Leistungsanforderung P* der Nutzlast 6 als Funktion der Zeit t mit einer Periode T zwischen einem Minimalwert Pmin und einem Maximalwert Pmax. Dies ist in FIG 2 gezeigt.

Der Zwischenkreisumrichter 99 weist in der Figur einen Pufferumrichter 8 auf. Eine rotierende Schwungmasse 9 ist in der Figur als Beispiel für einen kinetischen Energiespeicher über den Pufferumrichter 8 an den Gleichspannungszwischenkreis 1 gekoppelt. Dies ist vorteilhaft, da dadurch ein bidirektionaler Energieaustausch ermöglicht wird. Es ist also möglich, aus dem Gleichspannungszwischenkreis 1 elektrische Energie auszukoppeln und damit die Schwungmasse 9 zu beschleunigen. Es ist überdies möglich, die Schwungmasse 9 abzubremsen und elektrische Energie in den Gleichspannungszwischenkreis 1 einzuspeisen.

Ein kinetischer Energiespeicher kann also, wie in der Figur gezeigt, als rotierende Schwungmasse ausgebildet sein. Ein kinetischer Energiespeicher kann auch eine dynamoelektrische rotatorische Maschine sein, insbesondere ein Rotor einer dynamoelektrischen rotatorischen Maschine. Ferner kann der kinetische Energiespeicher auch eine dynamoelektrische rotatorische Maschine mit einer Trägheitsvorrichtung, z.B. einer Scheibe am Motorschaft, sein.

Das Beschleunigen und Abbremsen der Schwungmasse 9 erfolgt vorteilhaft im Gegentakt zum zeitlichen Verlauf der momentanen Leistungsanforderung P*. Dadurch kann die mittlere Leistungsentnahme aus dem Versorgungsnetz 4 in etwa konstant gehalten werden. Die rotierende Schwungmasse 9 ist vorzugsweise eine eigenständige Schwungmasse, die an eine elektrische Maschine angeflanscht ist.

Alternativ ist es möglich, dass die Schwungmasse 9 mit dem Rotor der elektrischen Maschine selbst identisch ist. Insbesondere in diesem Fall kann die elektrische Maschine als Außenläufermotor ausgebildet sein.

FIG 1 zeigt zudem, dass der Zwischenkreisumrichter 99 eine Steuereinrichtung 10 aufweist. Die Steuereinrichtung 10 ist vorteilhaft als programmierbare Steuereinrichtung ausgebildet. Ihre Wirkungsweise wird durch ein Systemprogramm 11 bestimmt. Das Systemprogramm 11 umfasst insbesondere Maschinencode 12, der von der Steuereinrichtung 10 unmittelbar abgearbeitet werden kann. Das Systemprogramm 11 ist von einem Benutzer des Zwischenkreisumrichters vorteilhaft nicht änderbar. Das Systemprogramm 11 bestimmt insbesondere das Zusammenwirken der verschiedenen Umrichter 3, 5 und 8 des Zwischenkreisumrichters.

FIG 2 zeigt einen möglichen Verlauf der momentanen Leistungsanforderung P*. Der zeitliche Verlauf der momentanen Leistungsanforderung P* und ggf. auch andere zeitliche Verläufe wie beispielsweise ein Geschwindigkeitsverlauf können nach Bedarf vorgegeben werden.

Der Maximalwert liegt meist oberhalb von einem Megawatt. Der Minimalwert Pmin liegt entweder im (positiven) niedrigen Kilowattbereich oder ist in manchen Fällen sogar negativ. Falls der Minimalwert negativ ist, kann für negative momentane Leistungsanforderungen P* ein Rückspeisen von elektrischer Energie in den Gleichspannungszwischenkreis 1 erfolgen.

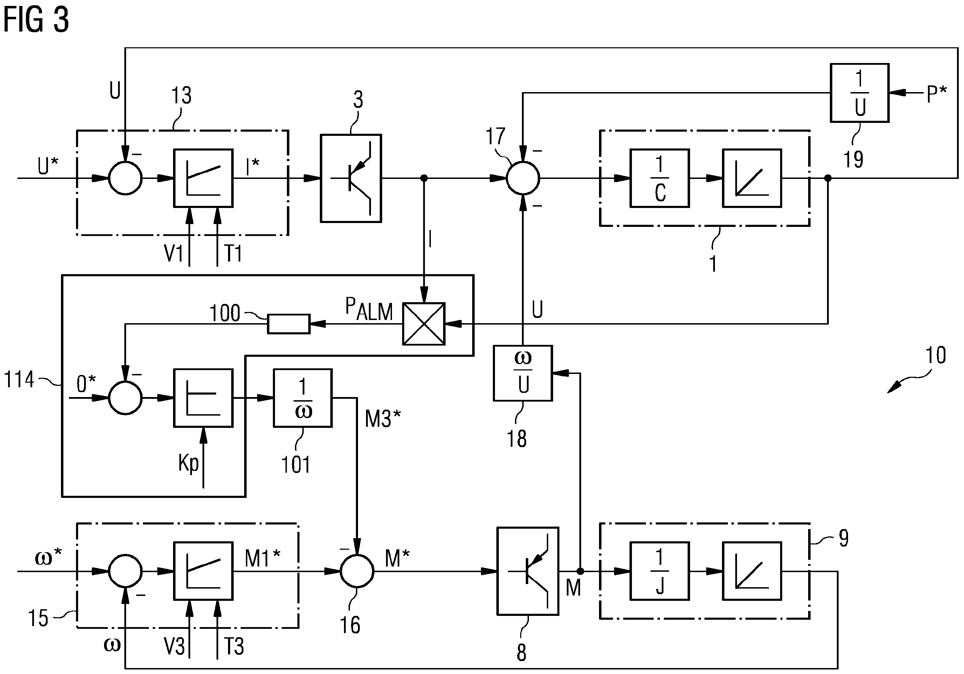

FIG 3 zeigt eine mögliche Ausgestaltung der internen Struktur der Steuereinrichtung 10.

Die Steuereinrichtung 10 weist einen ersten Spannungsregler 13, einen Drehzahlregler 15 und einen Leistungsregler 114 auf. Ein Einsatz des Leistungsreglers 114 stellt eine Verbesserung gegenüber der Struktur der bereits oben erwähnten Patentschrift EP 2 525 481 B1 dar, in welcher ein zweiter Spannungsregler eingesetzt wird.

Dem ersten Spannungsregler 13 werden, wie in der Figur gezeigt, eine Sollspannung U* und die Istspannung U des Zwischenkreises, d.h. die über dem Zwischenkreiskondensator 2 abfallende Spannung U, zugeführt. Die Sollspannung U* kann zeitvariabel sein. Vorzugsweise ist sie jedoch konstant. Anhand der Sollspannung U* und der Istspannung U ermittelt der erste Spannungsregler 13 einen Sollstrom I* für den Speiseumrichter 3. Der Speiseumrichter 3 wird entsprechend dem Sollstrom I* angesteuert.

Dem Drehzahlregler 15 werden eine Solldrehzahl ω* und eine Istdrehzahl ω der Schwungmasse 9 zugeführt. Die Solldrehzahl ω* kann zeitvariabel oder konstant sein. Falls die Solldrehzahl ω* variabel ist, variiert sie gegenläufig zur momentanen Leistungsanforderung P*. Anhand der Solldrehzahl ω* und der Istdrehzahl ω ermittelt der Drehzahlregler 15 einen ersten Sollmomentanteil M1* für die Schwungmasse 9.

Dem Leistungsregler 114 werden die Istspannung U sowie der Sollstrom I* zugeführt. Anhand der Istspannung U und des Sollstroms I* ermittelt der Leistungsregler 114 einen leistungsbasierten Sollmomentanteil M3* für die Schwungmasse 9.

Der erste Sollmomentanteil M1*und der leistungsbasierte Sollmomentanteil M3* sind einem Knotenpunkt 16 zugeführt. Dort werden die Sollmomentanteile M1* und M3* zu einem Sollmoment M* addiert.

Der Pufferumrichter 8 wird entsprechend dem im Knotenpunkt 16 ermittelten Sollmoment M* angesteuert. Die Schwungmasse 9, deren Trägheitsmoment in FIG 3 mit dem Bezugszeichen J versehen ist, wird daher mit einem entsprechenden Istmoment M beschleunigt oder verzögert.

In einem Knotenpunkt 17 werden zusätzlich zum Sollstrom I* die Einflüsse des Soll- oder Istmoments M*, M, vorzugsweise des Istmoments M, der Schwungmasse 9 und der momentanen Leistungsanforderung P* auf den Gleichspannungszwischenkreis 1 berücksichtigt. Das Moment M der Schwungmasse 9 und die momentane Leistungsanforderung P* der Nutzlast 6 sind vorteilhaft vor dem Berücksichtigen geeignet zu skalieren. Dies geschieht in Blöcken 18, 19. Der jeweilige Skalierungsfaktor w/U bzw. 1/U ist im jeweiligen Block 18 bzw. 19 angegeben.

Der erste Spannungsregler 13 ist, wie in der Figur gezeigt, vorzugsweise als PI-Regler ausgebildet. Er weist eine Proportionalverstärkung V1 und eine Nachstellzeit T1 auf. Da der erste Spannungsregler 13 auf kurzzeitige Schwankungen der Istspannung U, d.h. auf Schwankungen innerhalb der Periode T, nur in begrenztem Umfang reagieren soll, ist der erste Spannungsregler 13 relativ schwach parametriert. Insbesondere kann die Proportionalverstärkung V1 einen relativ kleinen Wert aufweisen. Ferner weist vorteilhaft die Nachstellzeit T1 einen relativ großen Wert auf. Insbesondere sind die Proportionalverstärkung V1 und die Nachstellzeit T1 derart bestimmt, dass der erste Spannungsregler 13 einen Sollwertsprung während einer Periode T nur zu einem geringen Teil ausregelt, beispielsweise zu 5 % bis 20 % oder maximal 25 %.

Der Leistungsregler 114 ist vorzugsweise, wie in der Figur gezeigt, als P-Regler ausgebildet. Der Leistungsregler 114 weist eine Proportionalverstärkung Kp auf.

Ein Messwert des P-Reglers ist eine Istleistung, also die aus der Istspannung U des Zwischenkreises und dem Sollstrom I* der Einspeisung berechnete Leistung. Die Istleistung P_{ALM} wird durch einen zu parametrierenden Hochpass 100 von einem Gleichanteil befreit. Da ein Ziel des Leistungsreglers eine Eliminierung von Wechselanteilen ist, ist der Sollwert null (mit 0* dargestellt). Es erfolgt vorteilhaft eine Skalierung mit dem Skalierungsfaktor 1/ ω in Block 101, um den leistungsbasierten Sollmomentanteil M3* für die Schwungmasse 9 zu erhalten.

Die Proportionalverstärkung Kp des Leistungsreglers 114 ist vorteilhaft relativ groß, damit der Leistungsregler 114 auch auf kurzfristige Schwankungen der Istspannung U reagiert. Insbesondere sollte die Proportionalverstärkung Kp derart bestimmt sein, dass der Leistungsregler 114 einen Sollwertsprung während eines Teils der Periode T - maximal der Hälfte der Periode T - zu einem Großteil ausregelt, d.h. zu mindestens 50 %, besser zu mindestens 70 % oder mehr.

Der Drehzahlregler 15 ist, wie in der Figur gezeigt, als PI-Regler ausgebildet. Der Drehzahlregler 15 weist eine Proportionalverstärkung V3 und eine Nachstellzeit T3 auf. Der Drehzahlregler 15 ist vorzugsweise relativ schwach parametriert.

Vorzugsweise gelten für den Drehzahlregler 15 die gleichen Auslegungskriterien wie für den ersten Spannungsregler 13.

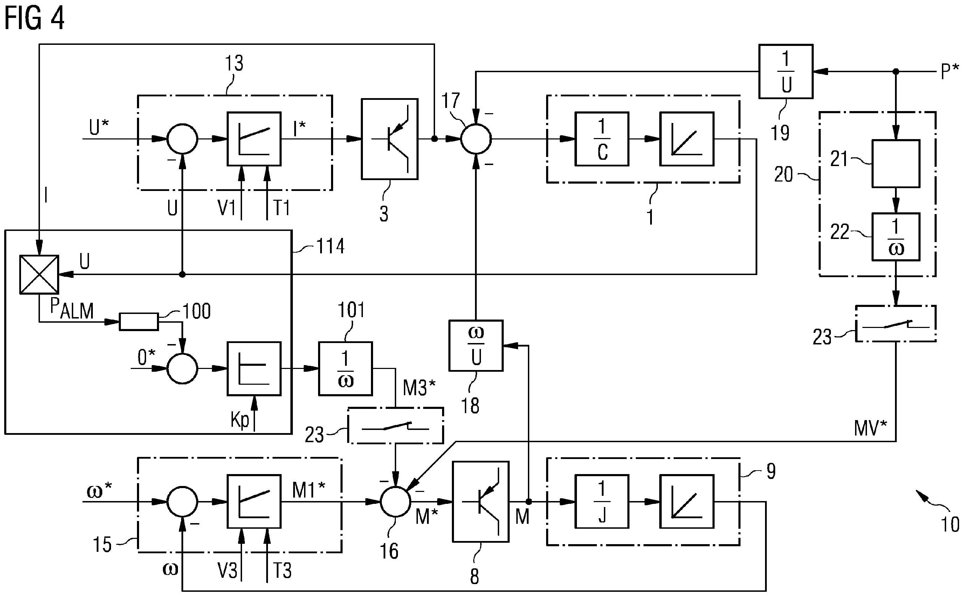

FIG 4 zeigt eine mögliche Ausgestaltung der internen Struktur der Steuereinrichtung 10 mit einem Vorsteuerkreis 20.

Der Vorsteuerkreis 20 weist ein Hochpassfilter 21 auf. Dem Hochpassfilter 21 wird die momentane Leistungsanforderung P* zugeführt. Im Hochpassfilter 21 wird die momentane Leistungsanforderung P* hochpassgefiltert. Anhand der hochpassgefilterten momentanen Leistungsanforderung ermittelt der Vorsteuerkreis 20 ein Vorsteuersignal MV*. Insbesondere wird die gefilterte momentane Leistungsanforderung in einem Block 22 geeignet skaliert. Der Skalierungsfaktor 1/w ist im Block 22 angegeben. Das Vorsteuersignal MV* wird, wie in der Figur gezeigt, dem Knotenpunkt 16 zugeführt und dort zum ersten Sollmomentanteil M1 und zum leistungsbasierten Sollmomentanteil M3* addiert. Das Vorsteuersignal MV* geht somit additiv in das Sollmoment M* ein.

Es ist möglich, dass entsprechend der Darstellung von FIG 4 sowohl der Leistungsregler 114 als auch der Vorsteuerkreis 20 permanent aktiv sind. Alternativ ist es möglich, dass dies nur in einem ersten Betriebszustand der Steuereinrichtung 10 der Fall ist. In diesem Fall kann in einem zweiten Betriebszustand der Steuereinrichtung 10 eines der beiden genannten Elemente 114, 20 - also entweder der Leistungsregler 114 oder der Vorsteuerkreis 20, nicht aber der Leistungsregler 114 und der Vorsteuerkreis 20 - deaktiviert sein. Das jeweils andere Element 20, 114 ist auch im zweiten Betriebszustand der Steuereinrichtung 10 aktiviert. Die Möglichkeit der Deaktivierung der Elemente 114, 20 ist in FIG 4 durch entsprechende, gestrichelt dargestellte Schalter 23 angedeutet. Der erste Betriebszustand der Steuereinrichtung 10, in dem sowohl der Leistungsregler 114 als auch der Vorsteuerkreis 20 aktiviert sind, kann insbesondere der laufende Betrieb des Zwischenkreisumrichters sein. Der zweite Betriebszustand der Steuereinrichtung 10, in dem eines der genannten Elemente 114, 20 deaktiviert ist, kann insbesondere der Anlauf des Zwischenkreisumrichters sein. Falls der Vorsteuerkreis 20 vorhanden ist, ist es möglich, die Vorsteuerung entsprechend der Darstellung von FIG 4 auf die unmittelbare Momentenvorsteuerung zu begrenzen.

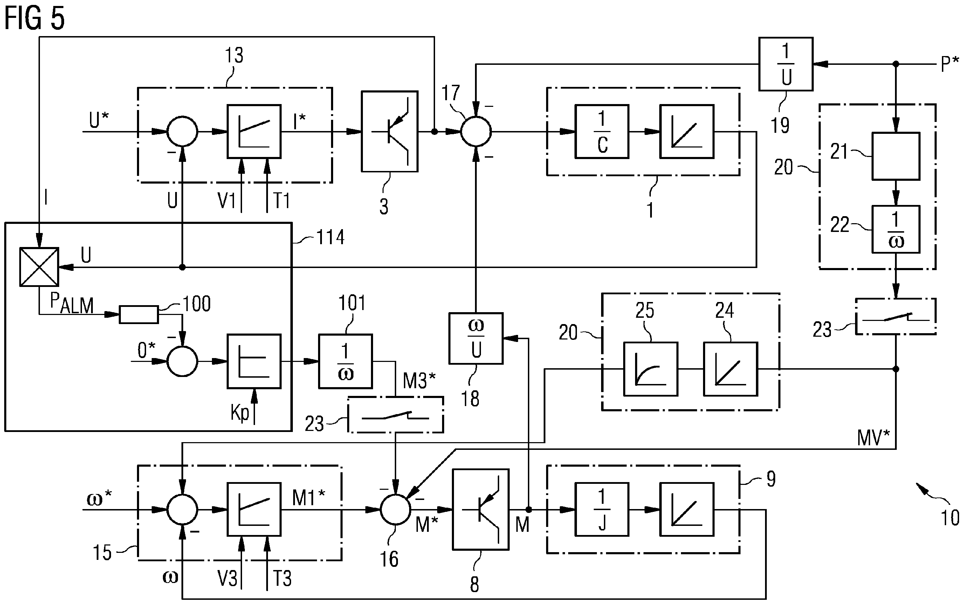

Alternativ ist es gemäß FIG 5 möglich, dass der Vorsteuerkreis 20 zusätzlich einen Integrator 24 und ein Verzögerungsglied 25 umfasst.

FIG 5 zeigt eine weitere mögliche Ausgestaltung der internen Struktur der Steuereinrichtung 10.

Die Figur zeigt, dass ein Verzögerungsglied 25 einem Integrator 24 nachgeschaltet ist. In diesem Fall wird das Vorsteuersignal MV* - zusätzlich zum Aufschalten im Knotenpunkt 16 - dem Integrator 24 zugeführt und dort integriert. Das Ausgangssignal des Integrators 24 wird dem Verzögerungsglied 25 zugeführt und dort um eine Verzögerungszeit verzögert. Das integrierte und zeitverzögerte Vorsteuersignal wird dem Drehzahlregler 15 als zusätzliches Eingangssignal zugeführt. Die Verzögerung des Verzögerungsgliedes 25 ist vorzugsweise derart bestimmt, dass sie die real auftretende Verzögerung kompensiert, d.h. diejenige Zeitdauer, die zwischen dem Aufschalten des Vorsteuersignals MV* am Knotenpunkt 16 und der dadurch bewirkten Änderung der Istdrehzahl ω vergeht.

Der Drehzahlregler 15 kann bei der Ausgestaltung von FIG 5 analog zu den Ausgestaltungen der FIG 3 und der FIG 4 parametriert sein. Im Gegensatz zu den Ausgestaltungen der FIG 3 und der FIG 4 ist es bei der Ausgestaltung gemäß FIG 5 jedoch alternativ möglich, den Drehzahlregler 15 stärker zu parametrieren. Insbesondere ist es bei der Ausgestaltung gemäß FIG 5 möglich, dass die Proportionalverstärkung V3 und die Nachstellzeit T3 des Drehzahlreglers 15 derart bestimmt sind, dass der Drehzahlregler 15 einen Sollwertsprung während eines Teils der Periode T zu einem Großteil ausregelt.

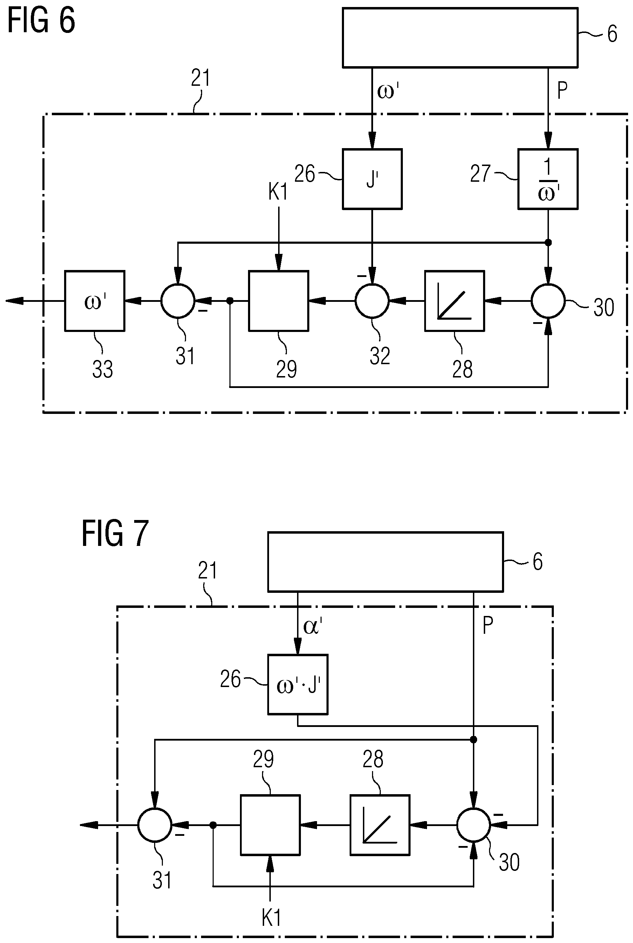

FIG 6 zeigt eine mögliche Ausgestaltung des Hochpassfilters der FIG 4 und der FIG 5.

Zur Realisierung des Hochpassfilters 21 der FIG 4 und der FIG 5 kann die Steuereinrichtung 10 beispielsweise eine Struktur implementieren, wie sie nachfolgend erläutert wird. Gemäß FIG 6 werden die momentane Leistung P und die momentane Drehzahl ω' der Nutzlast 6 (bzw. des entsprechenden elektrischen Antriebs) erfasst. Die Drehzahl ω' wird in einem Block 26 mit dem wirksamen Trägheitsmoment J' der Nutzlast 6 skaliert, die momentane Leistung P in einem Block 27 mit der momentanen Drehzahl w'. Die skalierten Größen werden weiterverarbeitet. Das Hochpassfilter 21 weist, wie in der Figur gezeigt, einen Integrator 28 und einen Mittelwertbildner 29 auf.

Vor dem Integrator 28, hinter dem Mittelwertbildner 29 und zwischen dem Integrator 28 und dem Mittelwertbildner 29 befindet sich jeweils ein Knotenpunkt 30 bis 32. Dem Knotenpunkt 30 vor dem Integrator 28 werden die skalierte momentane Leistung und (mit negativem Vorzeichen) das Ausgangssignal des Mittelwertbildners 29 zugeführt. Dem Knotenpunkt 32 zwischen dem Integrator 28 und dem Mittelwertbildner 29 werden zum einen das Ausgangssignal des Integrators 28 und zum anderen (mit negativem Vorzeichen) die skalierte Drehzahl ω' zugeführt. Dem Knotenpunkt 31 hinter dem Mittelwertbildner 29 werden die skalierte momentane Leistung und (mit negativem Vorzeichen) das Ausgangssignal des Mittelwertbildners 29 zugeführt. Das sich am Knotenpunkt 31 ergebende Signal wird in einem Block 33 mit der momentanen Drehzahl ω' der Nutzlast 6 skaliert.

Der Mittelwertbildner 29 mittelt das ihm zugeführte Eingangssignal mit einer Zeitkonstanten K1. Die Zeitkonstante K1 ist frei wählbar. Durch sie wird das Frequenzverhalten des Hochpassfilters 21 eingestellt. Vorzugsweise ist die Zeitkonstante K1 größer als die Periode T. Insbesondere kann das Verhältnis der beiden Größen K1 und T zwischen zwei und zehn liegen.

FIG 7 zeigt eine mögliche Ausgestaltung des Hochpassfilters der FIG 4 und der FIG 5.

Bei der Ausgestaltung gemäß FIG 6 wird das Nutzlastmoment hochpassgefiltert. Vorteilhafter ist es, gemäß FIG 7 direkt die Nutzleistung heranzuziehen. Bei FIG 7 wird anstelle der Drehzahl ω' der Nutzlast 6 die Drehbeschleunigung α' der Nutzlast 6 verwertet. Im Übrigen ist die Struktur des Hochpassfilters 21 aus FIG 7 ersichtlich. Die verwendeten Bezugszeichen und Größen korrespondieren mit denen von FIG 6.

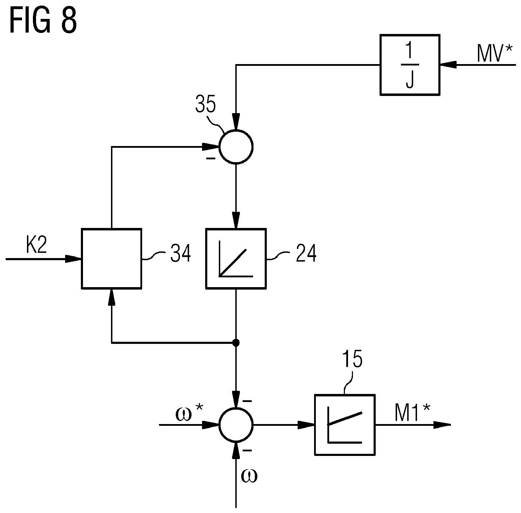

FIG 8 zeigt eine mögliche Ausgestaltung eines Aufschaltungsblocks.

Zur Realisierung des Integrators 24 nebst nachgeschaltetem Verzögerungsglied 25 von FIG 5 kann die Steuereinrichtung 10 beispielsweise eine Struktur implementieren, wie sie nachfolgend näher erläutert wird. Gemäß FIG 8 ist dem Integrator 24 ein Mittelwertbildner 34 parallel gegengeschaltet. Weiterhin ist dem Integrator 24 ein Knotenpunkt 35 vorgeordnet. Dem Knotenpunkt 35 werden das Vorsteuersignal MV* und (mit negativem Vorzeichen) das Ausgangssignal des Mittelwertbildners 34 zugeführt. Das Ausgangssignal des Integrators 24 wird einerseits dem Drehzahlregler 15 als zusätzliches Eingangssignal zugeführt und andererseits dem Mittelwertbildner 34 als dessen Eingangssignal zugeführt. Der Mittelwertbildner 34 entspricht einer Realisierung des Verzögerungsgliedes 25 von FIG 5. Er mittelt das ihm zugeführte Eingangssignal mit einer Zeitkonstanten K2. Die Zeitkonstante K2 ist frei wählbar. Durch sie wird die Zeitverzögerung des Verzögerungsgliedes 25 eingestellt.

Die vorliegende Erfindung ist vorteilhaft, da sie leicht zu implementieren ist und zuverlässig arbeitet.

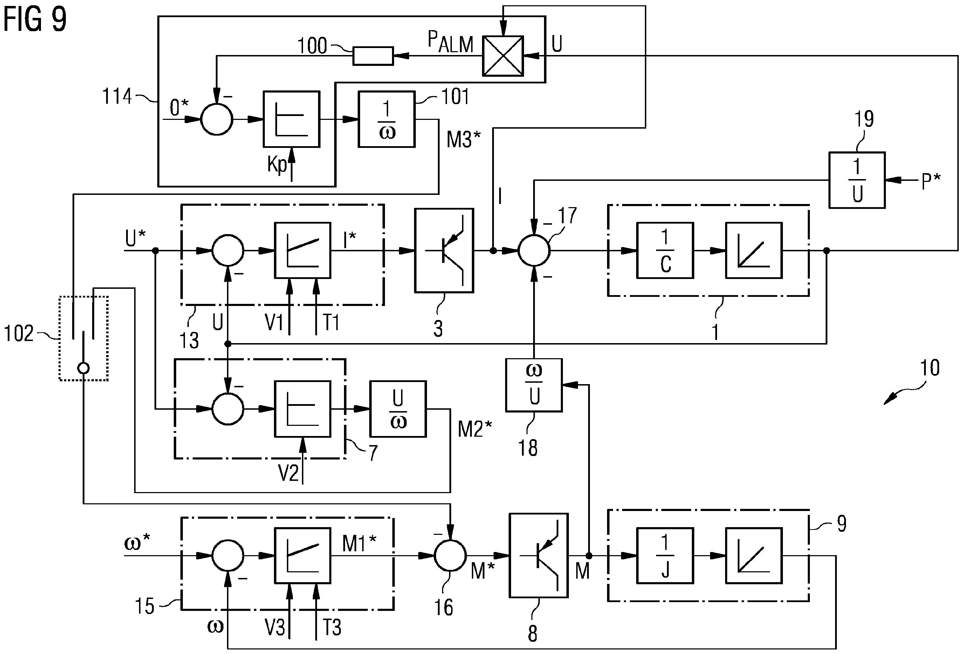

FIG 9 zeigt eine weitere mögliche Ausgestaltung der internen Struktur der Steuereinrichtung.

Die Figur zeigt die Steuereinrichtung 10, aufweisend den Leistungsregler 114 und einen zweiten Spannungsregler 14. Die Steuereinrichtung 10 implementiert den zweiten Spannungsregler 14, in dem anhand der Sollspannung U* und der Istspannung U ein zweiter Sollmomentanteil M2* für den kinetischen Energiespeicher ermittelt wird.

Bei Vorliegen einer ersten Anlagenbeschaffenheit ist vorteilhaft der zweite Spannungsregler 14 aktiviert und der Leistungsregler 114 deaktiviert. Bei Vorliegen einer zweiten Anlagenbeschaffenheit ist vorteilhaft der zweite Spannungsregler 14 deaktiviert und der Leistungsregler 114 aktiviert.

Bei Vorliegen der ersten Anlagenbeschaffenheit werden der erste und der zweite Sollmomentanteil M1* und M2* zu einem Sollmoment M* addiert und der Pufferumrichter 8 wird entsprechend angesteuert, bei Vorliegen der zweiten Anlagenbeschaffenheit werden der erste und der leistungsbasierte Sollmomentanteil M1* und M3* zu einem Sollmoment M* addiert und der Pufferumrichter 8 wird entsprechend angesteuert.

Dies gelingt, wie in der Figur gezeigt, durch einen Zweiwegschalter 102. Der Zweiwegschalter 102 kann vorteilhaft je nach Anlagenbeschaffenheit geschaltet werden. Wie der Zweiwegschalter 102 betätigt wird, ist nicht dargestellt. Vorzugsweise gelingt dies jedoch über eine Parametrierung.

Der Leistungsregler 114 und der zweite Spannungsregler 14 können also implementiert sein, jedoch wirkt anlagenspezifisch nur einer der beiden.

Diese Ausgestaltung ist von Vorteil, da eine Steuereinrichtung für eine Vielzahl von Anlagentypen und Anforderungen verwendet werden kann.

Die in den FIG 4, FIG 5, FIG 6, FIG 7 und FIG 8 beschriebenen Ausgestaltungen können auch in der in FIG 9 beschriebenen Ausgestaltung Anwendung finden.

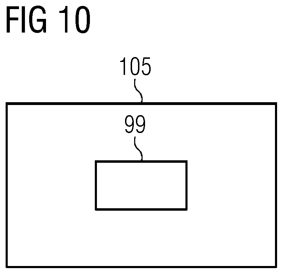

FIG 10 zeigt eine Umformmaschine 105 mit einem Zwischenkreisumrichter 99.

Die Umformmaschine 105 weist eine geradlinige Relativbewegung der Werkzeuge auf. Die Umformmaschine 105 ist vorzugsweise eine Presse, insbesondere eine Spindelpresse, Hydraulikpresse, Servopresse oder Pneumatikpresse.

## Patentansprüche

1. Steuereinrichtung (10) für einen Zwischenkreisumrichter (99),
- wobei der Zwischenkreisumrichter (99) einen Gleichspannungszwischenkreis (1) aufweist, in dem ein Zwischenkreiskondensator (2) angeordnet ist,
- wobei der Zwischenkreisumrichter (99) mindestens einen Speiseumrichter (3) aufweist, über den aus einem Versorgungsnetz (4) elektrische Energie in den Gleichspannungszwischenkreis (1) eingespeist wird,
- wobei der Zwischenkreisumrichter (99) mindestens einen Lastumrichter (5) aufweist, über den einer Nutzlast (6) aus dem Gleichspannungszwischenkreis (1) elektrische Energie zugeführt wird,
- wobei der Zwischenkreisumrichter (99) mindestens einen Pufferumrichter (8) aufweist, über den ein kinetischer Energiespeicher zum bidirektionalen Energieaustausch an den Gleichspannungszwischenkreis (1) angekoppelt ist,
- wobei die Steuereinrichtung (10) den Speiseumrichter (3), den Lastumrichter (5) und den Pufferumrichter (8) steuert,
- wobei die Steuereinrichtung (10) einen ersten Spannungsregler (13) implementiert, in dem anhand einer Sollspannung (U*) und einer über dem Zwischenkreiskondensator (2) abfallenden Istspannung (U) ein Sollstrom (I*) für den Speiseumrichter (3) ermittelt wird und von dem der Speiseumrichter (3) entsprechend angesteuert wird,
- wobei die Steuereinrichtung (10) einen Drehzahlregler (15) implementiert, in dem anhand einer Solldrehzahl (ω*) und einer Istdrehzahl (ω) des kinetischen Energiespeichers ein erster Sollmomentanteil (M1*) für den kinetischen Energiespeicher ermittelt wird, **gekennzeichnet dadurch**
- **dass** die Steuereinrichtung (10) einen Leistungsregler (114) implementiert, der anhand einer wenigstens teilweise speiseumrichterseitig ermittelten Istleistung (P_{ALM}) einen leistungsbasierten Sollmomentanteil (M3*) für den kinetischen Energiespeicher ermittelt,
- wobei der erste und der leistungsbasierte Sollmomentanteil (M1*, M3*) zu einem Sollmoment (M*) addiert werden und der Pufferumrichter (8) entsprechend angesteuert wird,
- wobei ein Sollwert des Leistungsreglers null ist,
- wobei die Istleistung (P_{ALM}) anhand der Istspannung (U) und des Sollstroms (I*) oder anhand der Istspannung (U) und eines durch den Speiseumrichter (3) gerichteten Iststroms (I) gebildet ist.

2. Steuereinrichtung (10) nach Anspruch 1, wobei der Leistungsregler (114) als P-Regler mit einer Proportionalverstärkung (Kp) ausgebildet ist.

3. Steuereinrichtung (10) nach einem der vorhergehenden Ansprüche, wobei der Leistungsregler (114) wenigstens ein Hochpassfilter (100), insbesondere zur Beseitigung eines Gleichanteils der Istleistung (P_{ALM}), aufweist.

4. Steuereinrichtung (10) nach einem der vorhergehenden Ansprüche, wobei ein Sollwert des Leistungsreglers (114) zur Beseitigung eines Wechselanteils der hochpassgefilterten Istleistung (P_{ALM}) 0 (0*) ist.

5. Steuereinrichtung (10) nach einem der vorhergehenden Ansprüche,
- wobei die Steuereinrichtung einen zweiten Spannungsregler (14) implementiert, in dem anhand der Sollspannung (U*) und der Istspannung (U) ein zweiter Sollmomentanteil (M2*) für den kinetischen Energiespeicher ermittelt wird,
- wobei bei Vorliegen einer ersten Anlagenbeschaffenheit der zweite Spannungsregler (14) aktiviert ist und der Leistungsregler (114) deaktiviert ist,
- wobei bei Vorliegen einer zweiten Anlagenbeschaffenheit der zweite Spannungsregler (14) deaktiviert ist und der Leistungsregler (114) aktiviert ist,
- wobei bei Vorliegen der ersten Anlagenbeschaffenheit der erste und der zweite Sollmomentanteil (M1*, M2*) zu einem Sollmoment (M*) addiert werden und der Pufferumrichter (8) entsprechend angesteuert wird,
- wobei bei Vorliegen der zweiten Anlagenbeschaffenheit der erste und der leistungsbasierte Sollmomentanteil (M1*, M3*) zu einem Sollmoment (M*) addiert werden und der Pufferumrichter (8) entsprechend angesteuert wird.

6. Steuereinrichtung (10) nach Anspruch 5, wobei der zweite Spannungsregler (14) als P-Regler ausgebildet ist und eine Proportionalverstärkung (V2) des zweiten Spannungsreglers (14) derart bestimmt ist, dass der zweite Spannungsregler (14) einen Sollwertsprung während eines Teils einer Periode (T) zu einem Großteil ausregelt.

7. Steuereinrichtung (10) nach einem der vorhergehenden Ansprüche,
- wobei eine momentane Leistungsanforderung (P*) mit einer Periode (T) zwischen einem Minimalwert (Pmin) und einem Maximalwert (Pmax) oszilliert,
- wobei der erste Spannungsregler (13) als PI-Regler ausgebildet ist, der eine Proportionalverstärkung (V1) und eine Nachstellzeit (T1) aufweist,
- wobei die Proportionalverstärkung (V1) und die Nachstellzeit (T1) des ersten Spannungsreglers (13) derart bestimmt sind, dass der erste Spannungsregler (13) einen Sollwertsprung während einer Periode (T) nur zu einem geringen Teil ausregelt.

8. Steuereinrichtung (10) nach einem der vorhergehenden Ansprüche
- wobei die Steuereinrichtung (10) zusätzlich einen Vorsteuerkreis (20) implementiert,
- wobei dem Vorsteuerkreis (20) die momentane Leistungsanforderung (P*) zugeführt wird,
- wobei der Vorsteuerkreis (20) die momentane Leistungsanforderung (P*) hochpassfiltert,
- wobei der Vorsteuerkreis (20) anhand der hochpassgefilterten momentanen Leistungsanforderung ein Vorsteuersignal (MV*) ermittelt, das zusätzlich zum ersten Sollmomentanteil (M1*) und zum leistungsbasierten Sollmomentanteil (M3*) oder zum ersten Sollmomentanteil (M1*) und zum zweiten Sollmomentanteil (M2*) additiv in das Sollmoment (M*) eingeht.

9. Steuereinrichtung (10) nach einem der vorhergehenden Ansprüche, wobei die Steuereinrichtung (10) derart ausgebildet ist, dass in einem ersten Betriebszustand der Steuereinrichtung (10) sowohl der leistungsbasierte Spannungsregler (114) als auch der Vorsteuerkreis (20) aktiviert sind und in einem zweiten Betriebszustand der Steuereinrichtung (10) alternativ der leistungsbasierte Spannungsregler (114) aktiviert ist und der Vorsteuerkreis (20) deaktiviert ist oder der leistungsbasierte Spannungsregler (114) deaktiviert ist und der Vorsteuerkreis (20) aktiviert ist.

10. Steuereinrichtung (10) nach Anspruch 9, wobei der erste Betriebszustand der Steuereinrichtung (10) der laufende Betrieb des Zwischenkreisumrichters (99) ist, wobei der zweite Betriebszustand der Steuereinrichtung (10) der Anlauf des Zwischenkreisumrichters (99) ist.

11. Steuereinrichtung (10) nach einem der Ansprüche 8 bis 10,
- wobei der Vorsteuerkreis (20) zusätzlich einen Integrator (24) und ein dem Integrator (24) nachgeschaltetes Verzögerungsglied (25) umfasst,
- wobei das Vorsteuersignal (MV*) dem Integrator (24) zugeführt wird und
- wobei das integrierte und zeitverzögerte Vorsteuersignal dem Drehzahlregler (15) als zusätzliches Eingangssignal zugeführt wird.

12. Steuereinrichtung (10) nach einem der vorhergehenden Ansprüche,
- wobei eine momentane Leistungsanforderung (P*) mit einer Periode (T) zwischen einem Minimalwert (Pmin) und einem Maximalwert (Pmax) oszilliert,
- wobei der Drehzahlregler (15) als PI-Regler ausgebildet ist, der eine Proportionalverstärkung (V3) und eine Nachstellzeit (T3) aufweist,
- wobei die Proportionalverstärkung (V3) und die Nachstellzeit (T3) des Drehzahlreglers (15) derart bestimmt sind, dass der Drehzahlregler (15) einen Sollwertsprung während eines Teils einer Periode (T) zu einem Großteil ausregelt.

13. Steuereinrichtung (10) nach einem der Ansprüche 1 bis 11,
- wobei die momentane Leistungsanforderung (P*) mit einer Periode (T) zwischen einem Minimalwert (Pmin) und einem Maximalwert (Pmax) oszilliert,
- wobei der Drehzahlregler (15) als PI-Regler ausgebildet ist, der eine Proportionalverstärkung (V3) und eine Nachstellzeit (T3) aufweist, und
- wobei die Proportionalverstärkung (V3) und die Nachstellzeit (T3) des Drehzahlreglers (15) derart bestimmt sind, dass der Drehzahlregler (15) einen Sollwertsprung während einer Periode (T) nur zu einem geringen Teil ausregelt.

14. Zwischenkreisumrichter (99),
- wobei der Zwischenkreisumrichter (99) einen Gleichspannungszwischenkreis (1) aufweist, in dem ein Zwischenkreiskondensator (2) angeordnet ist,
- wobei der Zwischenkreisumrichter (99) mindestens einen Speiseumrichter (3) aufweist, über den aus einem Versorgungsnetz (4) elektrische Energie in den Gleichspannungszwischenkreis (1) eingespeist wird,
- wobei der Zwischenkreisumrichter (99) mindestens einen Lastumrichter (5) aufweist, über den einer Nutzlast (6) aus dem Gleichspannungszwischenkreis (1) elektrische Energie zugeführt wird,
- wobei der Zwischenkreisumrichter (99) mindestens einen Pufferumrichter (8) aufweist, über den ein kinetischer Energiespeicher zum bidirektionalen Energieaustausch an den Gleichspannungszwischenkreis (1) angekoppelt ist,
- wobei der Zwischenkreisumrichter (99) eine Steuereinrichtung (10) aufweist, die den Speiseumrichter (3), den Lastumrichter (5) und den Pufferumrichter (8) steuert,
- wobei die Steuereinrichtung (10) nach einem der vorhergehenden Ansprüche ausgebildet ist.

15. Zwischenkreisumrichter (99) nach Anspruch 14, wobei der kinetische Energiespeicher als rotierende Schwungmasse (9) ausgebildet ist.

16. Umformmaschine (105), insbesondere Presse, aufweisend einen Zwischenkreisumrichter (99) nach Anspruch 15.

## Claims

1. Control facility (10) for a DC link converter (99),
- wherein the DC link converter (99) has a DC link (1), in which a DC link capacitor (2) is arranged,
- wherein the DC link converter (99) has at least one feed converter (3) via which electrical energy from a supply network (4) is fed into the DC link (1),
- wherein the DC link converter (99) has at least one load converter (5) via which electrical energy from the DC link (1) is supplied to a useful load (6),
- wherein the DC link converter (99) has at least one buffer converter (8) via which a kinetic energy store is coupled to the DC link (1) for bidirectional energy exchange,
- wherein the control facility (10) controls the feed converter (3), the load converter (5) and the buffer converter (8),
- wherein the control facility (10) implements a first voltage regulator (13) in which, on the basis of a desired voltage (U*) and an actual voltage (U) that drops across the DC link capacitor (2), a desired current (I*) is determined for the feed converter (3) and by which the feed converter (3) is actuated accordingly,
- wherein the control facility (10) implements a speed regulator (15) in which, on the basis of a desired speed (ω*) and an actual speed (ω) of the kinetic energy store, a first desired moment component (M1*) is determined for the kinetic energy store,
**characterised in that**
- the control facility (10) implements a power regulator (114), which, on the basis of an actual power (P_{ALM}) determined at least partially by the feed converter, determines a power-based desired moment component (M3*) for the kinetic energy store,
- wherein the first and the power-based desired moment component (M1*, M3*) are added to form a desired moment (M*) and the buffer converter (8) is actuated accordingly,
- wherein a target value of the power regulator is zero,
- wherein the actual power (P_{ALM}) is formed on the basis of the actual voltage (U) and the desired current (I*) or on the basis of the actual voltage (U) and an actual current (I) directed through the feed converter (3).

2. Control facility (10) according to claim 1, wherein the power regulator (114) is designed as a P controller with a proportional amplification (Kp).

3. Control facility (10) according to one of the preceding claims, wherein the power regulator (114) has at least one high-pass filter (100), in particular for elimination of a constant component of the actual power (P_{ALM}).

4. Control facility (10) according to one of the preceding claims, wherein a desired value of the power regulator (114) for the elimination of an alternating component of the high-pass-filtered actual power (P_{ALM}) is 0 (0*).

5. Control facility (10) according to one of the preceding claims,
- wherein the control facility implements a second voltage regulator (14) in which, on the basis of the desired voltage (U*) and the actual voltage (U), a second desired moment component (M2*) is determined for the kinetic energy store,
- wherein with the existence of a first system configuration, the second voltage regulator (14) is activated and the power regulator (114) is deactivated,
- wherein with the existence of a second system configuration, the second voltage regulator (14) is deactivated and the power regulator (114) is activated,
- wherein with the existence of the first system configuration, the first and the second desired moment component (M1*, M2*) are added to form a desired moment (M*) and the buffer converter (8) is actuated accordingly,
- wherein with the existence of a second system configuration, the first and the power-based desired moment component (M1*, M3*) are added to form a desired moment (M*) and the buffer converter (8) is actuated accordingly.

6. Control facility (10) according to claim 5, wherein the second voltage regulator (14) is designed as a P controller and a proportional amplification (V2) of the second voltage regulator (14) is determined in such a way that the second voltage regulator (14) to a large extent corrects a desired value jump during part of a period (T).

7. Control facility (10) according to one of the preceding claims,
- wherein an instantaneous power requirement (P*) oscillates with a period (T) between a minimum value (Pmin) and a maximum value (Pmax),
- wherein the first voltage regulator (13) is designed as a PI controller, which has a proportional amplification (V1) and a reset time (T1),
- wherein the proportional amplification (V1) and the reset time (T1) of the first voltage regulator (13) are determined in such a way that the first voltage regulator (13) corrects a desired value jump during a period (T) to only a small extent.

8. Control facility (10) according to one of the preceding claims,
- wherein the control facility (10) also implements a pilot control circuit (20),
- wherein the instantaneous power requirement (P*) is supplied to the pilot control circuit (20),
- wherein the pilot control circuit (20) high-pass filters the instantaneous power requirement (P*),
- wherein the pilot control circuit (20), on the basis of the high-pass-filtered instantaneous power requirement, determines a pilot control signal (MV*), which, in addition to the first desired moment component (M1*) and the power-based desired moment component (M3*) or the first desired moment component (M1*) and the second desired moment component (M2*), is included in the desired moment (M*) by way of addition.

9. Control facility (10) according to one of the preceding claims, wherein the control facility (10) is designed in such a way that in a first operating state of the control facility (10), both the power-based voltage regulator (114) and the pilot control circuit (20) are activated and in a second operating state of the control facility (10), alternatively the power-based voltage regulator (114) is activated and the pilot control circuit (20) is deactivated or the power-based voltage regulator (114) is deactivated and the pilot control circuit (20) is activated.

10. Control facility (10) according to claim 9, wherein the first operating state of the control facility (10) is the routine operation of the DC link converter (99), wherein the second operating state of the control facility (10) is the start-up of the DC link converter (99).

11. Control facility (10) according to one of claims 8 to 10,
- wherein the pilot control circuit (20) also comprises an integrator (24) and a delay element (25) connected downstream of the integrator (24),
- wherein the pilot control signal (MV*) is supplied to the integrator (24) and
- wherein the integrated and delayed pilot control signal is supplied to the speed regulator (15) as an additional input signal.

12. Control facility (10) according to one of the preceding claims,
- wherein an instantaneous power requirement (P*) oscillates with a period (T) between a minimum value (Pmin) and a maximum value (Pmax),
- wherein the speed regulator (15) is designed as a PI controller, which has a proportional amplification (V3) and a reset time (T3),
- wherein the proportional amplification (V3) and the reset time (T3) of the speed regulator (15) are determined in such a way that the speed regulator (15) to a large extent corrects a desired value jump during part of a period (T).

13. Control facility (10) according to one of claims 1 to 11,
- wherein the instantaneous power requirement (P*) oscillates with a period (T) between a minimum value (Pmin) and a maximum value (Pmax),
- wherein the speed regulator (15) is designed as a PI controller, which has a proportional amplification (V3) and a reset time (T3), and
- wherein the proportional amplification (V3) and the reset time (T3) of the speed regulator (15) are determined in such a way that the speed regulator (15) corrects a desired value jump during a period (T) to only a small extent.

14. DC link converter (99),
- wherein the DC link converter (99) has a DC link (1) in which a DC link capacitor (2) is arranged,
- wherein the DC link converter (99) has at least one feed converter (3) via which electrical energy from a supply network (4) is fed into the DC link (1),
- wherein the DC link converter (99) has at least one load converter (5) via which electrical energy from the DC link (1) is supplied to a useful load (6),
- wherein the DC link converter (99) has at least one buffer converter (8) via which a kinetic energy store is coupled to the DC link (1) for bidirectional energy exchange,
- wherein the DC link converter (99) has a control facility (10), which controls the feed converter (3), the load converter (5) and the buffer converter (8),
- wherein the control facility (10) is designed according to one of the preceding claims.

15. DC link converter (99) according to claim 14, wherein the kinetic energy store is designed as a rotating oscillating weight (9).

16. Forming machine (105), in particular press, having a DC link converter (99) according to claim 15.

## Revendications

1. Dispositif (10) de commande d'un convertisseur (99) à circuit intermédiaire,
- dans lequel le convertisseur (99) à circuit intermédiaire a un circuit (1) intermédiaire à tension continue, dans lequel un condensateur (2) de circuit intermédiaire est monté,
- dans lequel le convertisseur (99) à circuit intermédiaire a au moins un convertisseur (3) d'alimentation, par lequel de l'énergie électrique d'un réseau (4) d'alimentation est injectée dans le circuit (1) intermédiaire à tension continue,
- dans lequel le convertisseur (99) à circuit intermédiaire a au moins un convertisseur (5) de charge, par lequel de l'énergie électrique du circuit (1) intermédiaire à tension continue est envoyée à une charge (6) utile,
- dans lequel le convertisseur (99) à circuit intermédiaire a au moins un convertisseur (8) tampon, par lequel un accumulateur d'énergie cinétique est, pour l'échange d'énergie bidirectionnel, relié au circuit (1) intermédiaire à tension continue,
- dans lequel le dispositif (10) de commande commande le convertisseur (3) d'alimentation, le convertisseur (5) de charge et le convertisseur (8) tampon,
- dans lequel le dispositif (10) de commande met en oeuvre un premier régleur (13) de tension, dans lequel, à l'aide d'une tension (U*) de consigne et d'une tension (U) réelle chutant aux bornes du condensateur (2) de circuit intermédiaire, un courant (I*) de consigne du convertisseur (3) d'alimentation est déterminé et par lequel le convertisseur (3) d'alimentation est commandé en conséquence,
- dans lequel le dispositif (10) de commande met en oeuvre un régleur (15) de vitesse de rotation, dans lequel, à l'aide d'une vitesse (ω*) de rotation de consigne et d'une vitesse (ω) de rotation réelle de l'accumulateur d'énergie cinétique, une première composante (M1*) d'un couple de consigne pour l'accumulateur d'énergie cinétique est déterminé,
**caractérisé**
- **en ce que** le dispositif (10) de commande met en oeuvre un régleur (114) de puissance, qui, à l'aide d'au moins une puissance (P_{ALM}) réelle déterminée au moins en partie du côté du convertisseur d'alimentation, détermine une composante (M3*) de couple de consigne, reposant sur la puissance, pour l'accumulateur d'énergie cinétique,
- dans lequel la première composante (M1*) de couple de consigne et la composante (M3*) de couple de consigne reposant sur la puissance sont additionnées en un couple (M*) de consigne et le convertisseur (8) tampon est commandé en conséquence,
- dans lequel une valeur de consigne du régleur de puissance est nulle,
- dans lequel la puissance (P_{ALM}) réelle est formée à l'aide de la tension (U) réelle et du courant (I*) de consigne ou à l'aide de la tension (U) réelle et d'un courant (I) réel réctifié par le convertisseur (3) d'alimentation.

2. Dispositif (10) de commande suivant la revendication 1, dans lequel le régleur (114) de puissance est constitué sous la forme d'un régleur P ayant une amplification (Kp) proportionnelle.

3. Dispositif (10) de commande suivant l'une des revendications précédentes, dans lequel le régleur (114) de puissance a au moins un filtre (100) passe-haut, en particulier pour éliminer une composante continue de la puissance (P_{ALM}) réelle.

4. Dispositif (10) de commande suivant l'une des revendications précédentes, dans lequel une valeur de consigne du régleur (114) de puissance est destinée à éliminer une composante alternative de la puissance (P_{ALM}) 0 (0*) du filtre passe-haut.

5. Dispositif (10) de commande suivant l'une des revendications précédentes,
- dans lequel le dispositif de commande met en oeuvre un deuxième régleur (14) de tension, dans lequel, à l'aide de la tension (U*) de consigne et de la tension (U) réelle, une deuxième composante (M2*) de couple de consigne de l'accumulateur d'énergie cinétique est déterminée,
- dans lequel, en présence d'une première condition de l'installation, le deuxième régleur (14) de tension est activé et le régleur (114) de puissance est désactivé,
- dans lequel, en présence d'une deuxième condition de l'installation, le deuxième régleur (14) de tension est désactivé et le régleur (114) de puissance est activé,
- dans lequel, en présence de la première condition de l'installation, la première et la deuxième composantes (M1*, M2*) de couple de consigne sont additionnées en un couple (M*) de consigne et le convertisseur (8) tampon est commandé en conséquence,
- dans lequel, en présence de la deuxième condition de l'installation, la première et la deuxième composantes (M1*, M3*) de couple de consigne reposant sur la puissance sont additionnées en un couple (M*) de consigne et le convertisseur (8) est commandé en conséquence.

6. Dispositif (10) de commande suivant la revendication 5, dans lequel le deuxième régleur (14) de tension est constitué sous la forme d'un régleur P et une amplification (V2) proportionnelle du deuxième régleur (14) de tension est déterminée, de manière à ce que le deuxième régleur (14) de tension règle en grande partie un saut de valeur de consigne pendant une partie d'une période (T).

7. Dispositif (10) de commande suivant l'une des revendications précédentes,
- dans lequel une demande (P*) de puissance instantanée d'une période (T) oscille entre une valeur (Pmin) et une valeur (Pmax) maximum,
- dans lequel le premier régleur (13) de tension est constitué sous la forme d'un régleur PI, qui a une amplification (V1) proportionnelle et un temps (T1) de régulation,
- dans lequel l'amplification (V1) proportionnelle et le temps (T1) de régulation du premier régleur (13) de tension sont déterminés, de manière à ce que le premier régleur (13) de
- tension ne règle que, pour une petite partie, un saut de valeur de consigne pendant une période (T).

8. Dispositif (10) de commande suivant l'une des revendications précédentes,
- dans lequel le dispositif (10) de commande met en oeuvre en outre un circuit (20) pilote,
- dans lequel l'information (P*) de puissance instantanée est envoyée au circuit (20) pilote,
- dans lequel le circuit (20) pilote filtre passe-haut la demande (P*) de puissance instantanée,
- dans lequel le circuit (20) détermine, à l'aide de la demande de puissance instantanée filtrée passe-haut, un signal (MV*) pilote, qui, supplémentairement à la première composante (M1*) de couple de consigne et à la composante (M3*) de couple de consigne reposant sur la puissance ou à la première composante (M1*) de couple de consigne à la deuxième composante (M2*) de couple, entre additivement dans le couple (M*) de consigne.

9. Dispositif (10) de commande suivant l'une des revendications précédentes, dans lequel le dispositif (10) de commande est constitué de manière à ce que, dans un premier état de fonctionnement du dispositif (10) de commande, tant le régleur (114) de tension reposant sur la puissance qu'également le circuit (20) pilote sont activés et, dans un deuxième état de fonctionnement du dispositif (10) de commande, en alternance, le régleur (114) de tension reposant sur la puissance est activé et le circuit (20) pilote est désactivé, ou le régleur (114) de tension reposant sur la puissance est désactivé et le circuit (20) pilote est activé.

10. Dispositif (10) de commande suivant la revendication 9, dans lequel le premier état de fonctionnement du dispositif (10) de commande est le fonctionnement courant du convertisseur (99) à circuit intermédiaire, dans lequel le deuxième état de fonctionnement du dispositif (10) de commande est le démarrage du convertisseur (99) à circuit intermédiaire.

11. Dispositif (10) de commande suivant l'une des revendications 8 à 10,
- dans lequel le circuit (20) pilote comprend en outre un intégrateur (24) et un organe (25) de temporisation, monté en aval de l'intégrateur (24),
- dans lequel le signal (MV*) pilote est envoyé à l'intégrateur (24), et
- dans lequel le signal pilote intégré et retardé dans le temps est envoyé au régleur (15) de vitesse de rotation en tant que signal d'entrée supplémentaire.

12. Dispositif (10) de commande suivant l'une des revendications précédentes,
- dans lequel la demande (P*) de puissance instantanée d'une période (T) oscille entre une valeur (Pmin) minimum et une valeur (Pmax) maximum,
- dans lequel le régleur (15) de vitesse de rotation est constitué sous la forme d'un régleur PI, qui a une amplification (V3) proportionnelle et un temps (T3) de réglage,
- dans lequel l'amplification (V3) proportionnelle et le temps (T3) de réglage du régleur (15) de vitesse de rotation sont déterminés de manière à ce que le régleur (15) de vitesse de rotation règle, pour une grande partie, un saut de valeur de consigne pendant une partie d'une période (T).

13. Dispositif (10) de commande suivant l'une des revendications 1 à 11,
- dans lequel la demande (P*) de puissance instantanée d'une période (T) oscille entre une valeur (Pmin) minimum et une valeur (Pmax) maximum,
- dans lequel le régleur (15) de vitesse de rotation est constitué sous la forme d'un régleur PI, qui a une amplification (V3) proportionnelle et un temps (T3) de réglage, et
- dans lequel l'amplification (V3) proportionnelle et le temps (T3) de réglage du régleur (15) de vitesse de rotation sont déterminés de manière à ce que le régleur (15) de vitesse de rotation règle un saut de valeur de consigne pendant une période (T), seulement pour une petite partie.

14. Convertisseur (99) à circuit intermédiaire,
- dans lequel le convertisseur (99) à circuit intermédiaire a un circuit (1) intermédiaire à tension continue, dans lequel un condensateur (2) de circuit intermédiaire est monté,
- dans lequel le convertisseur (99) à circuit intermédiaire a au moins un convertisseur (3) d'alimentation, par lequel de l'énergie électrique d'un réseau (4) d'alimentation est injectée dans le circuit (1) intermédiaire à tension continue,
- dans lequel le convertisseur (99) à circuit intermédiaire a au moins un convertisseur (5) de charge, par lequel de l'énergie électrique du circuit (1) intermédiaire à tension continue est envoyée à une charge (6) utile,
- dans lequel le convertisseur (99) à circuit intermédiaire a au moins un convertisseur (8) tampon, par lequel un accumulateur d'énergie cinétique est, pour l'échange d'énergie bidirectionnel, relié au circuit (1) intermédiaire à tension continue,
- dans lequel le convertisseur (99) à circuit intermédiaire a un dispositif (10) de commande, qui commande le convertisseur (3) d'alimentation, le convertisseur (5) de charge et le convertisseur (8) tampon,
- dans lequel le dispositif (10) de commande est constitué suivant l'une des revendications précédentes.

15. Convertisseur (99) à circuit intermédiaire suivant la revendication 14, dans lequel l'accumulateur d'énergie cinétique est constitué sous la forme d'une masse (9) oscillante tournante.

16. Machine (105) de formage, en particulier presse, comportant un convertisseur (99) à circuit intermédiaire suivant la revendication 15.
